# FASCICULE DE BREVET EUROPEEN

(11) **EP 3 637 314 B1**
(45) Date de publication et mention de la délivrance du brevet: **09.08.2023**
(21) Numéro de dépôt: 19202021.2
(22) Date de dépôt: 08.10.2019
(51) Int. Cl.: G06V 20/59

(54) **SYSTÈME DE DÉTECTION FACIALE D'UN CONDUCTEUR ET MÉTHODE ASSOCIÉE**
GESICHTSERKENNUNGSVERFAHREN EINES FAHRZEUGFÜHRERS, UND ENTSPRECHENDE METHODE
SYSTEM FOR FACE DETECTION OF A DRIVER AND ASSOCIATED METHOD

(30) Priorité: 08.10.2018 FR 1871141
(43) Date de publication de la demande: 15.04.2020
(73) Titulaire: Aptiv Technologies Limited, St. Michael (BB)
(72) Inventeur: BORON, Artur, 32-070 Czernichów (PL); BOHDAN, Lukasz, 47-330 Zdzieszowice (PL); MUCHA, Rafal, 31-845 Kraków (PL)
(74) Mandataire: Vigand, Philippe

(56) Documents cités:
- EP-A1- 3 502 953
- JP-A- 2018 103 883
- US-A1- 2014 240 478

## Description

### Domaine technique

La présente invention concerne un système de détection faciale du conducteur d'un véhicule et sa méthode. Plus particulièrement, l'invention concerne la capture du mouvement du regard du conducteur afin de pouvoir analyser le comportement du regard.

### ARRIERE-PLAN TECHNOLOGIQUE DE L'INVENTION

Il est connu aujourd'hui de surveiller le regard d'un conducteur de véhicule afin de pouvoir déterminer, selon le comportement du regard, si le conducteur reste attentif à la conduite de son véhicule. Une détection d'endormissement, ou de distraction du conducteur peut être détectée à l'aide de caméras agencées dans le véhicule. Les caméras embarquées dans l'habitacle des véhicules apportent une contrainte de style et de montage lors de la conception et la fabrication des véhicules.

Des systèmes comme US2014/240478 A1 ou JP2018103883 A requièrent un élément réfléchissant additionnel pour capter le regard du conducteur de façon indirecte et sont donc plus complexes à mettre en œuvre . Il est donc important de proposer une solution nouvelle résolvant ces problèmes.

### Résumé de l'invention

Selon l'inventior définie par le jeu de revendications, un système de détection faciale d'un conducteur de véhicule comprend un combiné d'instruments pour le conducteur comportant un support et un tableau de bord orienté vers le conducteur et recouvert d'une vitre, ledit tableau de bord étant encastré dans le support; un dispositif de capture d'image comprenant une caméra configurée pour capturer des images séquentielles du regard du conducteur ; et un contrôleur configuré pour analyser le regard du conducteur. Au moins un élément intrinsèque du combiné défini une surface réfléchissante configurée pour réfléchir directement les images séquentielles du regard du conducteur telle qu'un plastic brillant, un élément chromé, un écran d'afficheur ou la vitre du tableau de bord. La caméra comprend un champ de vision orienté vers la surface réfléchissante de sorte à capturer indirectement les images du regard du conducteur.

De préférence, la caméra peut-être agencée dans le support du tableau de bord. La surface réfléchissante peut s'étendre selon une direction verticale de manière concave focalisant le champ de vision de la caméra vers un foyer optique localisé entre les branches du volant du véhicule de sorte à minimiser l'obturation du champ de vision par le volant. La surface réfléchissante concave est la surface de la vitre du tableau de bord. Le contrôleur peut être configuré pour analyser le regard du conducteur selon les images du regard inversées verticalement.

Le système de détection peut comprendre un dispositif d'illumination direct du visage du conducteur comprenant une source lumineuse configurée pour illuminer le visage du conducteur et un élément translucide agencé entre la source lumineuse et le visage du conducteur de sorte à camoufler la source lumineuse du regard du conducteur. La source lumineuse peut comprendre une source infra rouge.

Selon l'invention, une méthode de détection faciale d'un conducteur de véhicule comprenant le système de détection décrit ci-dessus comprend les étapes de
positionner la caméra comprenant un champ de vision dirigé vers une surface réfléchissante d'un élément intrinsèque au combiné d'instruments pour le conducteur, la surface réfléchissante étant configurée pour réfléchir directement les images séquentielles du regard du conducteur ;
capturer les images séquentielles réfléchies du regard du conducteur depuis la surface réfléchissante ;
analyser les images séquentielles pour déterminer le comportement du regard du conducteur.

L'étape de positionner la caméra peut comprendre une étape de positionner la caméra dans le support du tableau de bord du véhicule de sorte à ce que son champ de vision soit orienté vers la vitre du tableau de bord, et l'étape de capturer les images séquentielles peut être une étape de capture des images séquentielles réfléchies par la vitre du tableau de bord.

L'étape de positionner la caméra peut comprendre une étape de fournir une vitre du tableau de bord s'étendant verticalement de manière concave et une étpae de positionner la caméra de sorte que son champ de vision réfléchi par la surface concave de la vitre du tableau de bord se focalise vers un foyer optique entre les branches du volant du véhicule.

L'étape de capture des images séquentielles peut être une étape de capture des images séquentielles inversées verticalement du regard du conducteur.

D'autres buts et avantages de la présente invention apparaîtront au vu de la description qui suit.

### Brève description des dessins

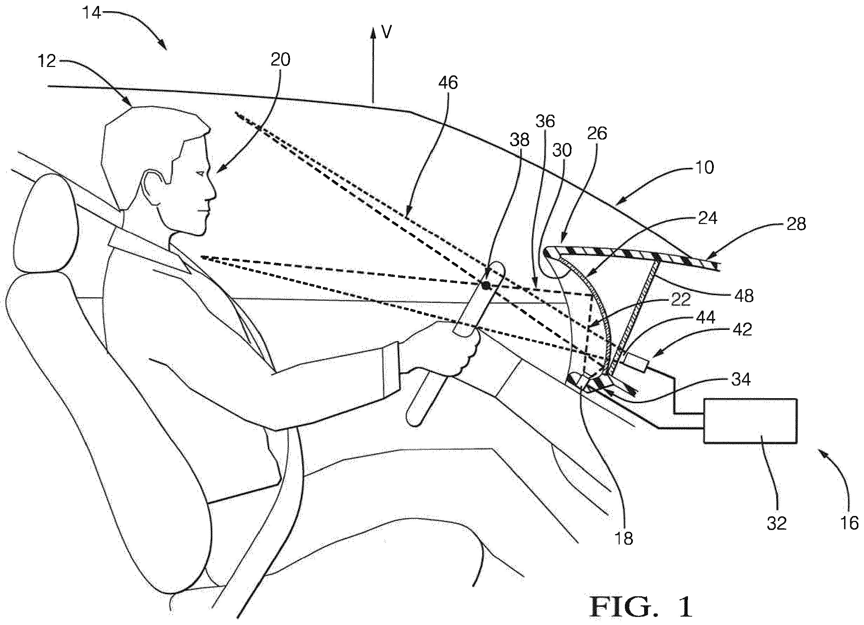

D'autres caractéristiques, buts et avantages de l'invention apparaîtront à la lecture de la description détaillée qui va suivre, et en regard des dessins annexés, donnés à titre d'exemple non limitatif et sur lesquels:
[fig.1]
   est une vue schématique en perspective du système de détection faciale d'un conducteur de véhicule agencé dans un véhicule selon un mode de réalisation de l'invention.
[fig.2]
   est une vue agrandie du système de détection faciale de la figure 1.
[fig.3]
   est un organigramme d'une méthode de détection faciale d'un conducteur de véhicule selon une mode de réalisation de l'invention.

### DESCRIPTION DES MODES DE REALISATION PREFERES

Afin de faciliter la description, et de façon non limitative, un axe vertical V est défini. Des orientations « bas », « haut », « dessus », « dessous », « inférieure » et « supérieure » sont définies selon la direction verticale.

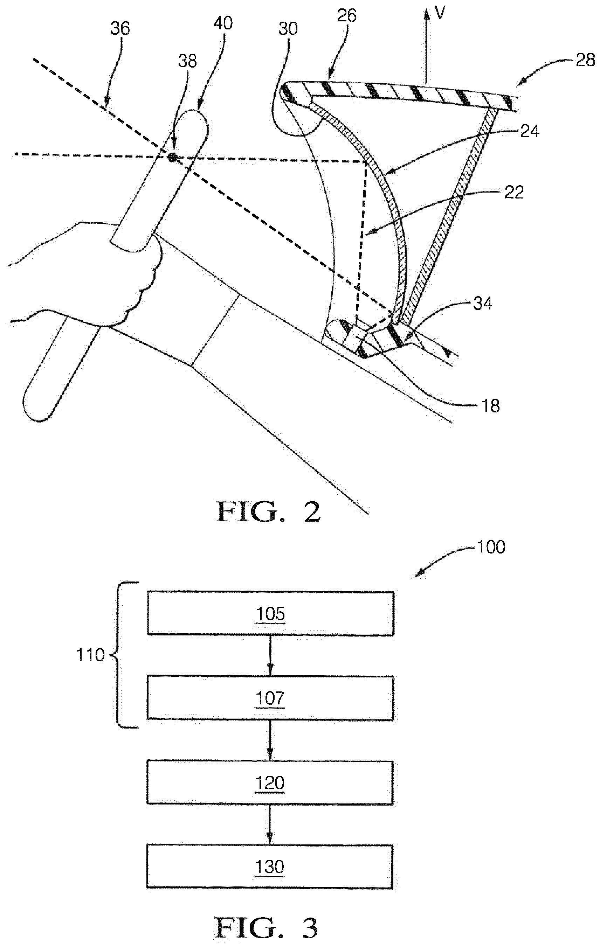

Selon la figure 1 et la figure 2, un système de détection faciale 10 d'un conducteur 12 de véhicule 14 comprend un dispositif de capture d'image 16 comprenant une caméra 18 configurée pour capturer des images séquentielles du visage du conducteur 12. L'invention se rapporte plus particulièrement à la détection du regard 20 du conducteur 12, c'est à dire à la capture du mouvement des pupilles de sorte à pouvoir analyser le regard 20. L'analyse du regard 20 consiste, de manière non limitative, à déterminer la direction du regard 20, la distraction du regard 20 vis-à-vis d'obstacles sur le trajet du véhicule 14, ou encore l'endormissement du conducteur 12.

Selon la figure 1, le champ de vision 22 de la caméra 18 n'est pas orienté directement vers le visage du conducteur 12. Le champ de vision 22 de la caméra 18 est orienté vers la vitre 24 du tableau de bord 26 du véhicule 14. On entend par tableau de bord 26 du véhicule 14, la portion du combiné d'instruments 28 comportant généralement entre autre un compteur de vitesse du véhicule. La vitre 24 du tableau de bord 26 est globalement orientée vers le conducteur 12 du véhicule 14 de sorte que, grâce aux propriétés réfléchissantes physiques de la vitre 24, l'image du regard 20 du conducteur 14 est réfléchie par la surface 30 de la vitre 24. La caméra 18 est donc configurée pour capturer les images réfléchies sur la vitre 24 du tableau de bord 26.

Le dispositif de capture d'image 16 comprend un contrôleur 32 en communication avec la caméra 18 et configuré pour analyser la séquence d'images capturées par la caméra 18 de sorte à pouvoir analyser le regard 20 du conducteur 12.

De manière plus globale, selon l'invention, la caméra 18 doit être agencée de sorte que son champ de vision 22 soit orienté vers une surface réfléchissante d'un élément intrinsèque de la portion du combiné d'instruments 28 du véhicule 14 prévue pour être accessible par le conducteur 12. Généralement, la portion du combiné d'instruments 28 prévue pour être accessible au conducteur 12 comprend, de façon non-limitative, à titre d'exemples, le tableau de bord 26, les voyants indicateurs d'informations concernant l'état du véhicule 14 (huile, batterie..), les touches de commandes telles que les feux de détresse, ainsi que les accessoires agencés sur le panneau centrale du combiné d'instruments 28, c'est à dire, à titre d'exemple non-limitatif, la commande du système de climatisation, le système de navigation et l'autoradio.

En d'autres termes, cela signifie que les éléments du combiné d'instruments 28 n'entrant pas dans le champ de vision direct du conducteur 12, mais par exemple du passager avant du véhicule 12, ne peuvent pas être assimilés à une surface réfléchissante du regard 20 du conducteur. A titre d'exemple non limitatif d'éléments du combiné d'instruments 28 pour le conducteur 12 pouvant comprendre une surface réfléchissante, on citera notamment les éléments en plastic brillant orientés vers le conducteur 12, des éléments chromés orientés vers le conducteur 12, un écran d'afficheur d'informations pour le conducteur 12 ou la vitre 24 du tableau de bord 26 du véhicule 12.

L'avantage de l'invention est notamment la non nécessité dans le système de détection indirecte, d'un élément de type miroir uniquement dédié à la réflexion de l'image du conducteur 12. De plus, généralement un tel miroir apporte une contrainte supplémentaire pour l'aspect de l'habitacle du véhicule 12.

Afin de dissimuler la caméra, selon l'invention, la caméra 18 est agencée dans le support 34 du combiné d'instruments 28, plus particulièrement dans la partie du support 34 en limite périphérique du tableau de bord 26 du véhicule 12. La caméra 18 est agencée suffisamment proche de la vitre 24 de sorte à ce que le champ de vision 22 de la caméra 18 ne couvre globalement que la partie du tableau de bord 26 se trouvant en vis-à-vis du regard 20 du conducteur 12.

Selon le mode particulier de réalisation, la vitre 24 du tableau de bord 26 s'étend de façon incurvée selon l'axe vertical V de sorte que la partie de la vitre 24 orientée vers le conducteur 12 présente une surface 30 réfléchissante concave. De par la forme concave de la surface 30 réfléchissante, le champ de vision réfléchi 36 de la caméra 18 est focalisé en un foyer optique 38. La caméra 18 est agencée distant de la vitre 24 de sorte que le foyer optique 38 est localisé entre les branches du volant 40 du véhicule 12 de sorte à minimiser l'obturation du champ de vision réfléchi 36 par le volant 40. L'effet de la focalisation du champ de vision réfléchi 36 en un point focal ou foyer optique 38 est l'inversion selon l'axe vertical V de l'image réfléchie du regard 20 du 12 sur la surface réfléchissante 30. En d'autres termes, le reflet du visage du conducteur 12 sur la vitre 24 du tableau de bord 26 est un reflet renversé verticalement du visage du conducteur 12. Le contrôleur 32 selon ce mode particulier de réalisation est donc configuré pour analyser le regard 20 du conducteur 12 selon les images du regard inversées verticalement.

De façon général, une surface réfléchissante concave d'un élément intrinsèque du combiné d'instruments 28 pour le conducteur induit une focalisation du champ de vision réfléchi 36 de la caméra 18 en un foyer optique 38, de sorte que lorsque ce foyer optique 38 est localisé entre le visage du conducteur 12 et la surface réfléchissante, l'image réfléchi est inversée.

Selon un mode particulier de réalisation, le système de détection faciale 32 comprend un dispositif d'illumination 42 du visage du conducteur 12. Le dispositif d'illumination 42 comprend au moins une source lumineuse 44. Comme illustré, l'illumination peut être une illumination directe selon laquelle la lumière illuminant le visage du conducteur se propage depuis la source lumineuse 44 jusqu'au visage sans élément intermédiaire déviant le faisceau lumineux 46 de la source lumineuse 44. Alternativement, l'illumination peut être une illumination indirecte, c'est-à-dire par l'intermédiaire d'une surface réfléchissant la lumière du dispositif vers le visage du conducteur 12.

Afin également de de ne pas ajouter de contraintes supplémentaires pour l'aspect de l'habitacle du véhicule 12, la source lumineuse 44 n'est pas visible par le conducteur 12. A cet effet, la source lumineuse 44 est camouflée par un élément translucide 48 agencé entre la source lumineuse 44 et le conducteur 12. De préférence, la source lumineuse 44 est de type source infrarouge afin de ne pas éblouit le conducteur 12 du véhicule 14.

Selon la figure 3, une méthode 100 de détection faciale du conducteur 12 comprenant le système de détection 10 décrit à la figure 1 comprend une étape consistant à positionner 110 la caméra 18 de sorte que son champ de vision 22 soit dirigé vers une surface réfléchissante 30 d'un élément intrinsèque du combiné d'instruments 28 pour le conducteur 12. Afin de pouvoir capturer le reflet de l'image du regard 20 du conducteur 12, la surface réfléchissante 30 doit être orientée vers le regard 20 du conducteur 12. La surface réfléchissante 30 est donc configurée pour réfléchir directement les images séquentielles du regard 20 du conducteur 12.

Une autre étape consiste donc à capturer 120 les images séquentielles réfléchies du regard 20 du conducteur 12 depuis la surface réfléchissante 30 afin d'exécuter une étape d'analyse 130 des images séquentielles du regard 20 du conducteur 12 afin de déterminer le comportement du regard 20 du conducteur 12.

Plus particulièrement, le positionnement de la caméra 18 s'effectue dans le support 34 du tableau de bord 26 du véhicule 14 de sorte à ce que le champ de vision 22 de la caméra 18 soit orienté vers la vitre 24 du tableau de bord 26. A cet effet, l'étape de capturer les images séquentielles est une étape de capture des images séquentielles réfléchies par la vitre 24 du tableau de bord 26.

Afin de prendre en compte la présence du volant 40 entre le tableau de bord 26 et le regard 20 du conducteur 12, la méthode comprend la fourniture 105 d'une vitre 24 du tableau de bord 26 s'étendant verticalement de manière concave de sorte que la surface réfléchissante 30 de la vitre 24 est une surface concave. A cet effet, la caméra 18 est agencée 107 de sorte que son champ de vision réfléchi 36 par la surface réfléchissante 30 concave de la vitre 24 du tableau de bord 26 se focalise vers un foyer optique 38 entre les branches du volant 40 du véhicule 14. Cette focalisation en un point du champ de vision réfléchi 36, c'est-à-dire le foyer optique 38, permet de réduire le champ de vision réfléchi 36 entre les branches du volant 40 de sorte à minimiser le risque d'obturation du champ de vision réfléchi 36 par les branches du volant 40. Le champ de vision réfléchi 36 s'étendant au-delà du foyer optique 38 vers le regard 20 du conducteur 12 renvoie une image réfléchi inversé, selon l'axe vertical V, à la caméra 18. L'étape de capture des images séquentielles est une étape de capture des images séquentielles inversées verticalement du regard 20 du conducteur 12.

## Revendications

1. Système de détection faciale (10) d'un conducteur (12) de véhicule (14) comprenant
un combiné d'instruments (28) pour le conducteur (12) comportant un support (34) et un tableau de bord (26) orienté vers le conducteur (12) et recouvert d'une vitre (24), ledit tableau de bord (26) étant encastré dans le support (34);
un volant (40) de véhicule muni de branches ;
un dispositif de capture d'image (16) comprenant une caméra (18) configurée pour capturer des images séquentielles du regard (20) du conducteur (12); et un contrôleur (32) configuré pour analyser le regard (20) du conducteur (12);
**caractérisé en ce que**
ladite vitre (24) du tableau de bord (26) définit une surface réfléchissante (30) configurée pour réfléchir directement les images séquentielles du regard (20) du conducteur (12), la caméra (18) comprenant un champ de vision (22) orienté vers la surface réfléchissante (30) de sorte à capturer indirectement les images du regard (20) du conducteur (12) ; et
ladite surface réfléchissante (30) s'étend selon une direction verticale de manière concave focalisant le champ de vision réfléchi (36) de la caméra (18) vers un foyer optique (38) localisé entre les branches du volant (40) du véhicule (14) de sorte à minimiser l'obturation du champ de vision réfléchi (36) par le volant (40), l'effet de la focalisation du champ de vision réfléchi (36) en un foyer optique (38) étant d'inverser selon la direction verticale l'image réfléchie du regard d'un conducteur (12) sur la surface réfléchissante (30).

2. Système (10) selon la revendication 1 **caractérisé en ce que** la caméra (18) est agencée dans le support (34) du tableau de bord (26).

3. Système (10) selon l'une quelconque des revendications 1 et 2, **caractérisé en ce que** le contrôleur (32) est configuré pour analyser le regard (20) du conducteur (12) selon les images du regard (20) inversées verticalement.

4. Système (10) selon l'une quelconque des revendications précédentes **caractérisé en ce que** le système (10) comprend un dispositif d'illumination (42) direct du visage du conducteur (12) comprenant une source lumineuse (44) configurée pour illuminer le visage du conducteur (12) et un élément translucide (48) agencé entre la source lumineuse (44) et le visage du conducteur (12) de sorte à camoufler la source lumineuse (44) du regard (20) du conducteur (12).

5. Système (10) selon la revendication 4, **caractérisé en ce que** la source lumineuse (44) comprend une source infra rouge.

6. Méthode (100) de détection faciale d'un conducteur (12) de véhicule (14) comprenant le système de détection (10) de l'une quelconque des revendications précédentes **caractérisé en ce que** la méthode comprend les étapes de
positionner (110) la caméra (18) comprenant un champ de vision (22) dirigé vers une surface réfléchissante (30) d'une vitre (24) d'un tableau de bord (26) du combiné d'instruments (28) pour le conducteur (12), la surface réfléchissante (30) étant configurée pour réfléchir directement les images séquentielles du regard (20) du conducteur (12);
capturer (120) les images séquentielles réfléchies du regard (20) du conducteur (12) depuis la surface réfléchissante (30);
analyser (130) les images séquentielles pour déterminer le comportement du regard (20) du conducteur (12) ;
ladite étape de positionner (110) la caméra (18) comprenant les étapes de :
fournir (105) la vitre (24) du tableau de bord (26) s'étendant verticalement de manière concave ;
positionner la caméra (18) dans le support (34) du tableau de bord (26) du véhicule (14) de sorte à ce que son champ de vision (22) soit orienté vers la vitre (24) du tableau de bord (26);
positionner (107) la caméra (18) de sorte que son champ de vision réfléchi (36) par la surface réfléchissante (30) concave de la vitre (24) du tableau de bord (26) se focalise vers un foyer optique (38) entre les branches du volant (40) du véhicule (14);
ladite étape de capturer (120) les images séquentielles étant une étape de capture des images séquentielles réfléchies par la vitre (24) du tableau de bord (26) et inversées verticalement du regard (20) du conducteur (12).

## Patentansprüche

1. Gesichtserkennungssystem (10) eines Fahrers (12) eines Fahrzeugs (14), umfassend
ein Kombiinstrument (28) für den Fahrer (12), aufweisend einen Halter (34) und eine Instrumententafel (26), die zum Fahrer (12) ausgerichtet ist und mit einer Scheibe (24) bedeckt ist, wobei die Instrumententafel (26) in den Halter (34) eingelassen ist;
ein Fahrzeuglenkrad (40) mit Speichen;
eine Bilderfassungsvorrichtung (16), die eine Kamera (18) umfasst, die dazu ausgelegt ist, Sequenzbilder des Blicks (20) des Fahrers (12) zu erfassen; und einen Controller (32), der dazu ausgelegt ist, den Blick (20) des Fahrers (12) zu analysieren;
**dadurch gekennzeichnet, dass**
die Scheibe (24) der Instrumententafel (26) eine reflektierende Oberfläche (30) definiert, die dazu ausgelegt ist, die Sequenzbilder des Blicks (20) des Fahrers (12) direkt zu reflektieren, wobei die Kamera (18) ein Sichtfeld (22) umfasst, das zu der reflektierenden Oberfläche (30) ausgerichtet ist, so dass die Bilder des Blicks (20) des Fahrers (12) indirekt erfasst werden; und
sich die reflektierende Oberfläche (30) in einer vertikalen Richtung konkav erstreckt, so dass das reflektierte Sichtfeld (36) der Kamera (18) zu einem optischen Fokus (38) fokussiert wird, der zwischen den Speichen des Lenkrads (40) des Fahrzeugs (14) lokalisiert ist, so dass die Verdeckung des reflektierten Sichtfelds (36) durch das Lenkrad (40) minimiert wird, wobei die Wirkung der Fokussierung des reflektierten Sichtfelds (36) in einem optischen Fokus (38) darin besteht, das reflektierte Bild des Blicks eines Fahrers (12) auf der reflektierenden Oberfläche (30) in der vertikalen Richtung umzudrehen.

2. System (10) nach Anspruch 1, **dadurch gekennzeichnet, dass** die Kamera (18) im Halter (34) der Instrumententafel (26) eingerichtet ist.

3. System (10) nach einem der Ansprüche 1 und 2, **dadurch gekennzeichnet, dass** der Controller (32) dazu ausgelegt ist, den Blick (20) des Fahrers (12) gemäß den vertikal umgekehrten Bildern des Blicks (20) zu analysieren.

4. System (10) nach einem der vorangehenden Ansprüche, **dadurch gekennzeichnet, dass** das System (10) eine direkte Beleuchtungsvorrichtung (42) des Gesichts des Fahrers (12) umfasst, die eine Lichtquelle (44) umfasst, die dazu ausgelegt ist, das Gesicht des Fahrers (12) zu beleuchten und ein durchscheinendes Element (48), das zwischen der Lichtquelle (44) und dem Gesicht des Fahrers (12) eingerichtet ist, so dass die Lichtquelle (44) vom Blick (20) des Fahrers (12) verborgen wird.

5. System (10) nach Anspruch 4, **dadurch gekennzeichnet, dass** die Lichtquelle (44) eine Infrarotquelle umfasst.

6. Methode (100) zur Gesichtserkennung eines Fahrers (12) eines Fahrzeugs (14), umfassend das Erkennungssystem (10) von einem der vorangehenden Ansprüche, **dadurch gekennzeichnet, dass** die Methode die folgenden Schritte umfasst
Positionieren (110) der Kamera (18), die ein Sichtfeld (22) umfasst, das zu einer reflektierenden Oberfläche (30) einer Scheibe (24) einer Instrumententafel (26) des Kombiinstruments (28) für den Fahrer (12) ausgerichtet ist, wobei die reflektierende Oberfläche (30) dazu ausgelegt ist, die Sequenzbilder des Blicks (20) des Fahrers (12) direkt zu reflektieren;
Erfassen (120) der reflektieren Sequenzbilder des Blicks (20) des Fahrers (12) ab der reflektierenden Oberfläche (30);
Analysieren (130) der Sequenzbilder, um das Verhalten des Blicks (20) des Fahrers (12) zu bestimmen;
wobei der Schritt des Positionierens (110) der Kamera (18) die folgenden Schritte umfasst:
Bereitstellen (105) der Scheibe (24) der Instrumententafel (26), die sich vertikal konkav erstreckt;
Positionieren (107) der Kamera (18) im Halter (34) der Instrumententafel (26) des Fahrzeugs (14), so dass ihr Sichtfeld (22) zur Scheibe (24) der Instrumententafel (26) ausgerichtet ist;
Positionieren (107) der Kamera (18) derart, dass ihr von der konkaven reflektierenden Oberfläche (30) der Scheibe (24) der Instrumententafel (26) reflektiertes Sichtfeld (36) zu einem optischen Fokus (38) zwischen den Speichen des Lenkrads (40) des Fahrzeugs (14) fokussiert wird;
wobei der Schritt des Erfassens (120) der Sequenzbilder ein Schritt des Erfassens der von der Scheibe (24) der Instrumententafel (26) reflektierten und vertikal umgekehrten Sequenzbilder des Blicks (20) des Fahrers (12) ist.

## Claims

1. A system (10) for the facial detection of a driver (12) of a vehicle (14) comprising:
an instrument cluster (28) for the driver (12) including a support (34) and a dashboard (26) oriented towards the driver (12) and covered with a glass (24), said dashboard (26) being embedded in the support (34);
a vehicle steering wheel (40) provided with spokes;
an image capture device (16) comprising a camera (18) configured to capture sequential images of the gaze (20) of the driver (12); and a controller (32) configured to analyze the gaze (20) of the driver (12);
**characterized in that**
said glass (24) of the dashboard (26) defines a reflective surface (30) configured to directly reflect the sequential images of the gaze (20) of the driver (12), the camera (18) comprising a field of view (22) oriented towards the reflective surface (30) so as to indirectly capture the images of the gaze (20) of the driver (12); and
said reflective surface (30) extends along a vertical direction in a concave manner focusing the reflected field of view (36) of the camera (18) towards an optical focal spot (38) located between the spokes of the steering wheel (40) of the vehicle (14) so as to minimize the obstruction of the reflected field of view (36) by the steering wheel (40), the effect of the focusing of the reflected field of view (36) at an optical focal spot (38) being to invert, along the vertical direction, the reflected image of a driver's gaze (12) on the reflective surface (30).

2. The system (10) according to claim 1 **characterized in that** the camera (18) is arranged in the support (34) of the dashboard (26).

3. The system (10) according to any one of claims 1 and 2, **characterized in that** the controller (32) is configured to analyze the gaze (20) of the driver (12) according to the images of the vertically inverted gaze (20).

4. The system (10) according to any one of the preceding claims, **characterized in that** the system (10) comprises a device (42) for directly illuminating the face of the driver (12) comprising a light source (44) configured to illuminate the face of the driver (12) and a translucent element (48) arranged between the light source (44) and the face of the driver (12) so as to camouflage the light source (44) from the gaze (20) of the driver (12).

5. The system (10) according to claim 4, **characterized in that** the light source (44) comprises an infrared source.

6. A method (100) for the facial detection of a driver (12) of a vehicle (14) comprising the detection system (10) of any one of the preceding claims, **characterized in that** the method comprises the steps of:
positioning (110) the camera (18) comprising a field of view (22) directed towards a reflective surface (30) of a glass (24) of a dashboard (26) of the instrument cluster (28) for the driver (12), the reflective surface (30) being configured to directly reflect the sequential images of the gaze (20) of the driver (12);
capturing (120) the reflected sequential images of the gaze (20) of the driver (12) from the reflective surface (30);
analyzing (130) the sequential images to determine the behavior of the gaze (20) of the driver (12);
said step of positioning (110) the camera (18) comprising the steps of:
providing (105) the glass (24) of the dashboard (26) vertically extending in a concave manner;
positioning the camera (18) in the support (34) of the dashboard (26) of the vehicle (14) so that its field of view (22) is oriented towards the glass (24) of the dashboard (26);
positioning (107) the camera (18) so that its field of view (36) reflected by the concave reflective surface (30) of the glass (24) of the dashboard (26) is focused towards an optical focal spot (38) between the spokes of the steering wheel (40) of the vehicle (14);
said step of capturing (120) the sequential images being a step of capturing sequential images of the gaze (20) of the driver (12) which are reflected by the glass (24) of the dashboard (26) and vertically inverted.
